# EUROPEAN PATENT APPLICATION

(11) **EP 3 667 453 A1**
(43) Date of publication of application: **17.06.2020**
(21) Application number: 17920925.9
(22) Date of filing: 11.08.2017
(51) Int. Cl.: G05D 1/10

(54) **DRONE CONTROL METHOD AND DEVICE, DRONE AND CORE NETWORK DEVICE**

(71) Applicant: Beijing Xiaomi Mobile Software Co., Ltd., Beijing 100085 (CN)
(72) Inventor: HONG, Wei, Beijing 100085 (CN)
(74) Representative: dompatent von Kreisler Selting Werner - Partnerschaft von Patent- und Rechtsanwälten mbB
(86) International application number: PCT/CN2017/097178
(87) International publication number: WO 2019/028862

(57) **Abstract**

A UAV control method and device are provided. The method is applied to a UAV and includes: sending attachment request information to a core network; receiving information, acquired by the core network from a preset server, of a UAV no-fly zone; and determining whether the UAV is allowed to fly according to a relationship between a position of the UAV and the UAV no-fly zone. According to the present disclosure, a UAV may access a core network to acquire the information of a UAV no-fly zone from a preset server through the core network and further determine whether it is allowed to fly or not according to the relationship between its position and the UAV no-fly zone. For example, under the condition that the UAV is within the UAV no-fly zone, it is determined that flight is not allowed; and under the condition that the UAV is outside the UAV no-fly zone, it is determined that flight is allowed. Therefore, the relationship between the UAV and the UAV no-fly zone is accurately determined through the core network, and all UAVs accessing the core network are effectively managed.

## Description

### TECHNICAL FIELD

The present disclosure generally relates to the technical field of terminals, and more particularly, to an unmanned aerial vehicle (UAV) control method and device, a UAV, a core network device and a computer-readable storage medium.

### BACKGROUND

Along with development of UAVs, UAVs have been applied to more and more fields and the number of UAVs has also been greatly increased.

In a practical application scenario, there exist some no-fly zones where flight of UAVs is prohibited. However, for many UAVs, it is difficult to accurately judge relationships between UAVs and no-fly zones, which brings difficulties in management.

### SUMMARY

The present disclosure provides a UAV control method and device, a UAV, a core network device and a computer-readable storage medium, to overcome the shortcoming in a related art.

According to a first aspect of embodiments of the present disclosure, a UAV control method is provided, which may be applied to a UAV and include that:
attachment request information is sent to a core network;
information, acquired by the core network from a preset server, of a UAV no-fly zone is received; and
whether the UAV is allowed to fly or not is determined according to a relationship between a position of the UAV and the UAV no-fly zone.

Optionally, the UAV control method may further include that:
when the attachment request information is sent to the core network, information of the position of the UAV is sent to the core network; and
when the information, acquired by the core network from the preset server, of the UAV no-fly zone is received, information, generated by the core network, of the relationship between the position of the UAV and the UAV no-fly zone is received.

Optionally, the UAV control method may further include that:
before whether the UAV is allowed to fly or not is determined, the information of the position of the UAV is acquired; and
the information of the relationship between the position of the UAV and the UAV no-fly zone is generated.

Optionally, the operation that whether the UAV is allowed to fly or not is determined according to the relationship between the position of the UAV and the UAV no-fly zone may include that:
in a case that the UAV is within the UAV no-fly zone, it is determined that the UAV is not allowed to fly; and
in a case that the UAV is outside the UAV no-fly zone, it is determined that the UAV is allowed to fly.

Optionally, the UAV control method may further include that:
under a condition of determining that the UAV is not allowed to fly, in a case that the UAV is flying, the UAV is controlled to land.

Optionally, the UAV control method may further include that:
under a condition of determining that the UAV is not allowed to fly, in a case that an instruction of controlling the UAV to take off is received, prompting information is returned to a device sending the instruction.

According to a second aspect of the embodiments of the present disclosure, a UAV control method is provided, which may include that:
attachment request information sent by a UAV is received;
information of a UAV no-fly zone is acquired from a preset server; and
the information of the UAV no-fly zone is sent to the UAV.

Optionally, the UAV control method may further include that:
when the attachment request information is received, information of a position of the UAV is received;
information of a relationship between the position of the UAV and the UAV no-fly zone is generated; and
the information of the relationship is sent to the UAV while the information of the UAV no-fly zone is sent to the UAV.

Optionally, the UAV control method may further include that:
when the attachment request information is received, information of a position of the UAV is received,
wherein the operation that the information of the UAV no-fly zone is acquired from the preset server may include that:
   information of a no-fly zone is acquired from the preset server, wherein a minimum distance between a boundary of the no-fly zone and the position of the UAV is shorter than a preset distance.

According to a third aspect of the embodiments of the present disclosure, a UAV control device is provided, which may be applied to a UAV and include:
a request sending module, configured to send attachment request information to a core network;
an information receiving module, configured to receive information, acquired by the core network from a preset server, of a UAV no-fly zone; and
a flight determination module, configured to determine whether the UAV is allowed to fly or not according to a relationship between a position of the UAV and the UAV no-fly zone.

Optionally, the UAV control device may further include:
an information sending module, configured to, when the request sending module sends the attachment request information to the core network, send information of the position of the UAV to the core network,
wherein the information receiving module may further be configured to, when the information, acquired by the core network from the preset server, of the UAV no-fly zone is received, receive information, generated by the core network, of the relationship between the position of the UAV and the UAV no-fly zone.

Optionally, the UAV control device may further include:
a position acquisition module, configured to, before the flight determination module determines whether the UAV is allowed to fly or not, acquire information of the position of the UAV; and
a relationship generation module, configured to generate information of the relationship between the position of the UAV and the UAV no-fly zone.

Optionally, the flight determination module may be configured to, in a case that the UAV is within the UAV no-fly zone, determine that the UAV is not allowed to fly and, in a case that the UAV is outside the UAV no-fly zone, determine that the UAV is allowed to fly.

Optionally, the UAV control device may further include:
a control module, configured to, under a condition of determining that the UAV is not allowed to fly, in a case that the UAV is flying, control the UAV to land.

Optionally, the UAV control device may further include:
a prompting module, configured to, under a condition of determining that the UAV is not allowed to fly, in a case that an instruction of controlling the UAV to take off is received, return prompting information to a device sending the instruction.

According to a fourth aspect of the embodiments of the present disclosure, a UAV control device is provided, which may include:
a request receiving module, configured to receive attachment request information from an unmanned aerial vehicle;
a no-fly acquisition module, configured to acquire information of a UAV no-fly zone from a preset server; and
an information sending module, configured to send the information of the UAV no-fly zone to the UAV.

Optionally, the UAV control device may further include:
an information receiving module, configured to, when the request receiving module receives the attachment request information, receive information of a position of the UAV; and
a relationship generation module, configured to generate information of a relationship between the position of the UAV and the UAV no-fly zone,
wherein the information sending module may further be configured to send the information of the relationship to the UAV while sending the information of the UAV no-fly zone is sent to the UAV.

Optionally, the UAV control device may further include:
a position receiving module, configured to, when the request receiving module receives the attachment request information, receive the information of the position of the UAV,
wherein the no-fly acquisition module may be configured to acquire information of a no-fly zone from the preset server, where a minimum distance between a boundary of the no-fly zone and the position of the UAV is shorter than a preset distance.

According to a fifth aspect of the embodiments of the present disclosure, a UAV is provided, which may include:
a processor; and
a memory configured to store an instruction executable for the processor,
wherein the processor may be configured to:
   send attachment request information to a core network;
   receive information, acquired by the core network from a preset server, of a UAV no-fly zone; and
   determine whether the UAV is allowed to fly or not according to a relationship between a position of the UAV and the UAV no-fly zone.

According to a sixth aspect of the embodiments of the present disclosure, a core network device is provided, which may include:
a processor; and
a memory configured to store an instruction executable for the processor,
wherein the processor may be configured to:
   receive attachment request information from a UAV;
   acquire information of a UAV no-fly zone from a preset server; and
   send the information of the UAV no-fly zone to the UAV.

According to a seventh aspect of the embodiments of the present disclosure, a computer-readable storage medium is provided, which has a computer program stored thereon, the program, when executed by a processor, is capable of implementing steps of:
sending attachment request information to a core network;
receiving information, acquired by the core network from a preset server, of a UAV no-fly zone; and
determining whether the UAV is allowed to fly or not according to a relationship between a position of the UAV and the UAV no-fly zone.

According to an eighth aspect of the embodiments of the present disclosure, a computer-readable storage medium is provided, which has a computer program stored thereon, the program, when executed by a processor, is capable of implementing steps of:
receiving attachment request information from an unmanned aerial vehicle;
acquiring information of a UAV no-fly zone from a preset server; and
sending the information of the UAV no-fly zone to the UAV.

The technical solutions provided by the embodiments of the present disclosure may have the following beneficial effects.

It can be seen from the above embodiments that, according to the present disclosure, a UAV may access a core network to acquire information of a UAV no-fly zone from a preset server through the core network and further determine whether it is allowed to fly or not according to a relationship between its position and the UAV no-fly zone. For example, under a condition that its position is within the UAV no-fly zone, it is determined that flight is not allowed; and under a condition that its position is outside the UAV no-fly zone, it is determined that flight is allowed. Therefore, the relationship between the UAV and the UAV no-fly zone can be accurately determined through the core network, and all UAVs accessing the core network can be effectively managed.

It is to be understood that the above general descriptions and detailed descriptions below are only exemplary and explanatory and not intended to limit the present disclosure.

### BRIEF DESCRIPTION OF THE DRAWINGS

In order to describe the technical solutions in the embodiments of the present application more clearly, the accompanying drawings required to be used for descriptions about the embodiments will be simply introduced below. It is apparent that the accompanying drawings described below are only some embodiments of the present application. Those of ordinary skill in the art may further obtain other accompanying drawings according to these accompanying drawings without creative work.
FIG. 1 is a schematic flowchart illustrating a UAV control method according to an exemplary embodiment.
FIG. 2 is a schematic flowchart illustrating another UAV control method according to an exemplary embodiment.
FIG. 3 is a schematic flowchart illustrating another UAV control method according to an exemplary embodiment.
FIG. 4 is a schematic flowchart illustrating another UAV control method according to an exemplary embodiment.
FIG. 5 is a schematic flowchart illustrating another UAV control method according to an exemplary embodiment.
FIG. 6 is a schematic flowchart illustrating another UAV control method according to an exemplary embodiment.
FIG. 7 is a schematic flowchart illustrating a UAV control method according to an exemplary embodiment.
FIG. 8 is a schematic flowchart illustrating another UAV control method according to an exemplary embodiment.
FIG. 9 is a schematic flowchart illustrating yet another UAV control method according to an exemplary embodiment.
FIG. 10 is a schematic block diagram of a UAV control device according to an exemplary embodiment.
FIG. 11 is a schematic block diagram of another UAV control device according to an exemplary embodiment.
FIG. 12 is a schematic block diagram of another UAV control device according to an exemplary embodiment.
FIG. 13 is a schematic block diagram of another UAV control device according to an exemplary embodiment.
FIG. 14 is a schematic block diagram of another UAV control device according to an exemplary embodiment.
FIG. 15 is a schematic block diagram of a UAV control device according to an exemplary embodiment.
FIG. 16 is a schematic block diagram of another UAV control device according to an exemplary embodiment.
FIG. 17 is a schematic block diagram of another UAV control device according to an exemplary embodiment.
FIG. 18 is a schematic block diagram of a device for controlling an unmanned aerial vehicle according to an exemplary embodiment.
FIG. 19 is a schematic block diagram of a device for controlling an unmanned aerial vehicle according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

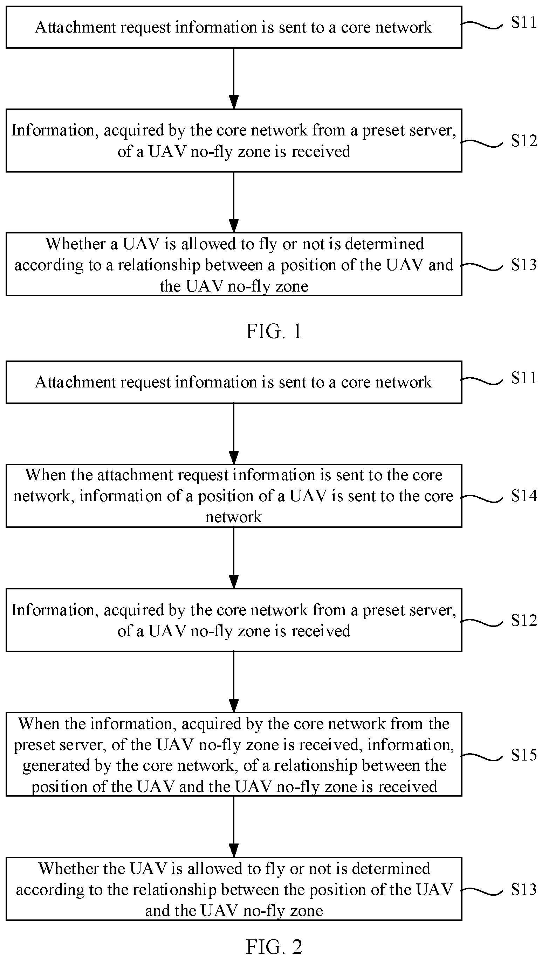

FIG. 1 is a schematic flowchart illustrating a UAV control method according to an exemplary embodiment. The UAV control method of the embodiment may be applied to a UAV, and the UAV may access a core network corresponding to a cellular network through a base station. As shown in FIG. 1, the UAV control method may include the following steps.

In step S11, attachment request information is sent to a core network.

In an embodiment, the UAV may send the attachment request information to the core network when being started, or may send the attachment request information to the core network when receiving a request instruction. The request instruction may be from a remote control device for controlling the UAV or may be from an application in a terminal such as a mobile phone.

The attachment request information may be explicit attachment request information or may be implicit attachment request information.

In step S12, information, acquired by the core network from a preset server, of a UAV no-fly zone is received.

In an embodiment, the core network, after receiving the attachment request information from the UAV, may send request information for acquiring the information of the UAV no-fly zone to the preset server, and the preset server, after receiving the request information, may send the information of the UAV no-fly zone to the core network.

The core network, after receiving the information of the UAV no-fly zone, may send the information of the UAV no-fly zone to the UAV, and may also generate information of a relationship between a position of the UAV and the UAV no-fly zone according to information of the position of the UAV and the information of the UAV no-fly zone and send the information of the relationship to the UAV.

In step S13, whether the UAV is allowed to fly or not is determined according to a relationship between a position of the UAV and the UAV no-fly zone.

In an embodiment, the UAV may receive the information of the UAV no-fly zone from the core network and generate the information of the relationship between the position of the UAV and the UAV no-fly zone according to the information of its own position and the information of the UAV no-fly zone. In addition, the UAV may also directly receive the information, generated by the core network, of the relationship between the position of the UAV and the UAV no-fly zone. The information, stored in the preset server, of the UAV no-fly zone may be updated in real time. For example, some areas may be added as UAV no-fly zones, and some areas may also be removed from the UAV no-fly zones.

In an embodiment, the UAV may access the core network to acquire the information of the UAV no-fly zone from the preset server through the core network and further determine whether it is allowed to fly or not according to the relationship between its own position and the UAV no-fly zone. For example, under the condition that the UAV is within the UAV no-fly zone, it is determined that flight is not allowed; and under the condition that the UAV is outside the UAV no-fly zone, it is determined that flight is allowed. Therefore, the relationship between the UAV and the UAV no-fly zone can be accurately determined through the core network, and all UAVs accessing the core network can be effectively managed.

FIG. 2 is a schematic flowchart illustrating another UAV control method according to an exemplary embodiment. As shown in FIG. 2, based on the embodiment shown in FIG. 1, the UAV control method may further include the following steps.

In step S14, information of the position of the UAV is sent to the core network when the attachment request information is sent to the core network.

In step S15, when the information, acquired by the core network from the preset server, of the UAV no-fly zone is received, information, generated by the core network, of the relationship between the position of the UAV and the UAV no-fly zone is received.

In an embodiment, the UAV, when sending the attachment request information to the core network, may send the information of the position of the UAV to the core network together. The core network, after acquiring the information of the UAV no-fly zone from the preset server, may generate the information of the relationship between the position of the UAV and the UAV no-fly zone, for example, the UAV is within the UAV no-fly zone or the UAV is outside the UAV no-fly zone, according to the information of the position of the UAV and the information of the UAV no-fly zone, and send the information of the relationship between the position of the UAV and the UAV no-fly zone to the UAV.

Accordingly, the UAV can determine the relationship between the position of the UAV and the UAV no-fly zone according to the information sent by the core network rather than based on a determination process carried out by itself, so that the computation burden of the UAV can be reduced.

It is to be noted that the step S14 may be executed after the step S11 as shown in FIG. 2, or may be set to be executed concurrently with S11 according to a requirement. The step S15 may be executed after S12 as shown in FIG. 2, or may be set to be executed concurrently with S12 according to a requirement.

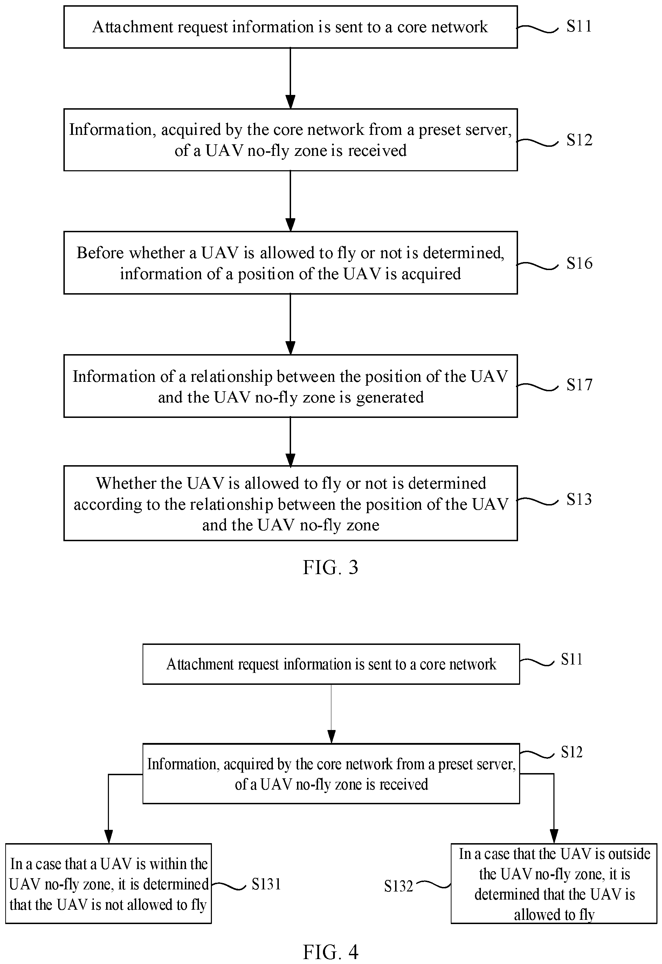

FIG. 3 is a schematic flowchart illustrating another UAV control method according to an exemplary embodiment. As shown in FIG. 3, based on the embodiment shown in FIG. 1, the UAV control method may further include the following steps.

In step S16, before whether the UAV is allowed to fly or not is determined, the information of the position of the UAV is acquired.

In step S17, the information of the relationship between the position of the UAV and the UAV no-fly zone is generated.

In an embodiment, the UAV, after receiving the information of the UAV no-fly zone from the core network, may acquire the information of its own position according to a positioning system such as a Global Positioning System (GPS) and may further generate the information of the relationship between the position of the UAV and the UAV no-fly zone according to the information of its own position and the information of the UAV no-fly zone.

Based on this, the core network is not required to generate the information of the relationship between the position of the UAV and the UAV no-fly zone, and instead, the UAV may generate the information of the relationship between the position of the UAV and the UAV no-fly zone, so that the computation burden of the core network can be reduced.

It is to be noted that the embodiments shown in FIG. 2 and FIG. 3 may be chosed according to a practical condition. For example, when an arithmetic capability of the UAV is relatively high and a load of the core network is relatively high, the embodiment shown in FIG. 3 may be chosed. In another example, when the arithmetic capability of the UAV is relatively low and the load of the core network is relatively low, the embodiment shown in FIG. 2 may be chosed.

FIG. 4 is a schematic flowchart illustrating another UAV control method according to an exemplary embodiment. As shown in FIG. 4, based on the embodiment shown in FIG. 1, the operation that whether the UAV is allowed to fly or not is determined according to the relationship between the position of the unmanned aerial and the UAV no-fly zone may include the following steps.

In step S131, in a case that the UAV is within the UAV no-fly zone, it is determined that the UAV is not allowed to fly.

In step S132, in a case that the UAV is outside the UAV no-fly zone, it is determined that the UAV is allowed to fly.

In an embodiment, the relationship between the position of the UAV and the UAV no-fly zone may mainly include two situations, namely the UAV is within the UAV no-fly zone and the UAV is outside the UAV no-fly zone. When the UAV is within the UAV no-fly zone, it is determined that the UAV is not allowed to fly because no UAV is allowed to fly in a UAV no-fly zone. When the UAV is outside the UAV no-fly zone, it is determined that the UAV is allowed to fly because no UAV is prohibited to fly outside a UAV no-fly zone.

Specifically, a boundary of the UAV no-fly zone may be determined by multiple coordinates (for example, latitude and longitude coordinates), and whether the UAV is within the UAV no-fly zone or not may be determined according to a relationship between the boundary and the position of the UAV.

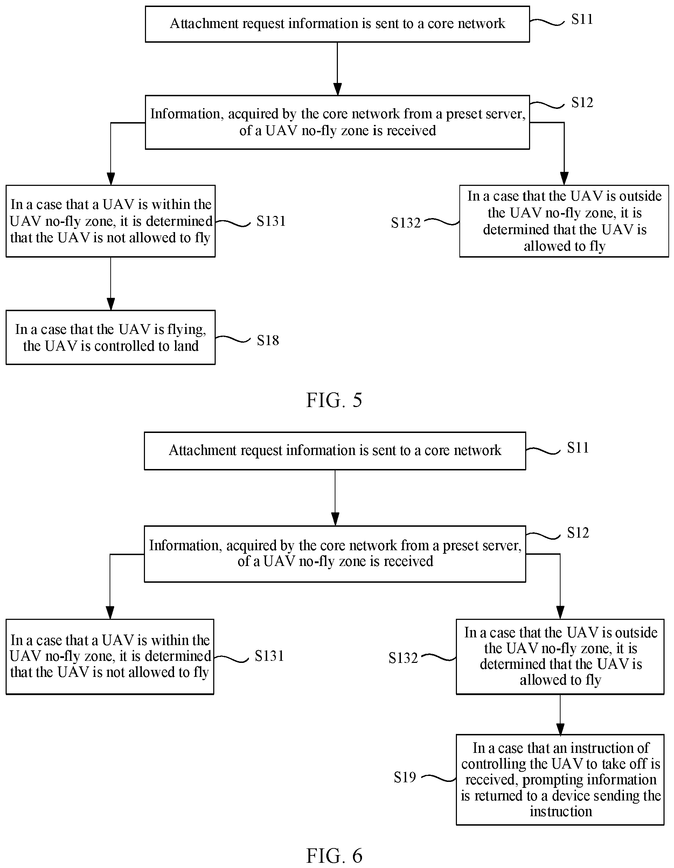

FIG. 5 is a schematic flowchart illustrating another UAV control method according to an exemplary embodiment. As shown in FIG. 5, based on the embodiment shown in FIG. 4, the UAV control method may further include the following step.

In step S18, under a condition of determining that the UAV is not allowed to fly, in a case that the UAV is flying, the UAV is controlled to land.

In an embodiment, the UAV, under the condition of determining that it is not allowed to fly, may detect its own present state and, if it is flying, may control itself to land to avoid a rule from being violated by its continuous flight in the UAV no-fly zone.

FIG. 6 is a schematic flowchart illustrating another UAV control method according to an exemplary embodiment. As shown in FIG. 6, based on the embodiment shown in FIG. 4, the following step may be further included.

In step S19, under the condition of determining that the UAV is not allowed to fly, in a case that an instruction of controlling the UAV to take off is received, prompting information is returned to a device sending the instruction.

In an embodiment, the UAV, under the condition of determining that it is not allowed to fly, may still receive the instruction of controlling itself to take off from the device such as a control device and a terminal, and then the UAV may return the prompting information to the control device or the terminal sending the instruction to make such a prompt that it is within the UAV no-fly zone such that a controller of the UAV may timely know about a reason why the UAV cannot take off.

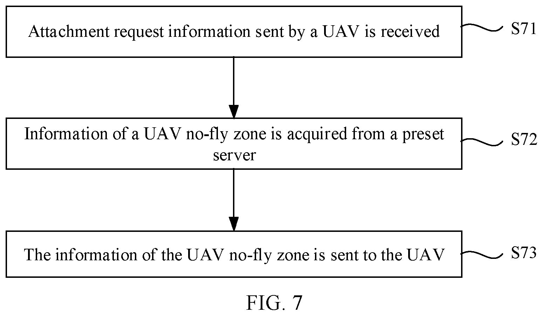

FIG. 7 is a schematic flowchart illustrating a UAV control method according to an exemplary embodiment. The UAV control method of the embodiment may be applied to a core network of a cellular network, and a UAV may access the core network through a base station. As shown in FIG. 7, the UAV control method may include the following steps.

In step S71, attachment request information sent by the UAV is received.

In step S72, information of a UAV no-fly zone is acquired from a preset server.

In step S73, the information of the UAV no-fly zone is sent to the UAV.

In an embodiment, the core network, after receiving the attachment request information from the UAV, may send request information for acquiring the information of the UAV no-fly zone to the preset server, and the preset server, after receiving the request information, may send the information of the UAV no-fly zone to the core network.

The core network, after receiving the information of the UAV no-fly zone, may send the information of the UAV no-fly zone to the UAV such that the UAV may receive the information of the UAV no-fly zone and determine a relationship between its own position and the UAV no-fly zone according to information of its own position and the information of the UAV no-fly zone. Therefore, the relationship between the UAV and the UAV no-fly zone can be accurately determined through the core network, and all UAVs accessing the core network can be effectively managed.

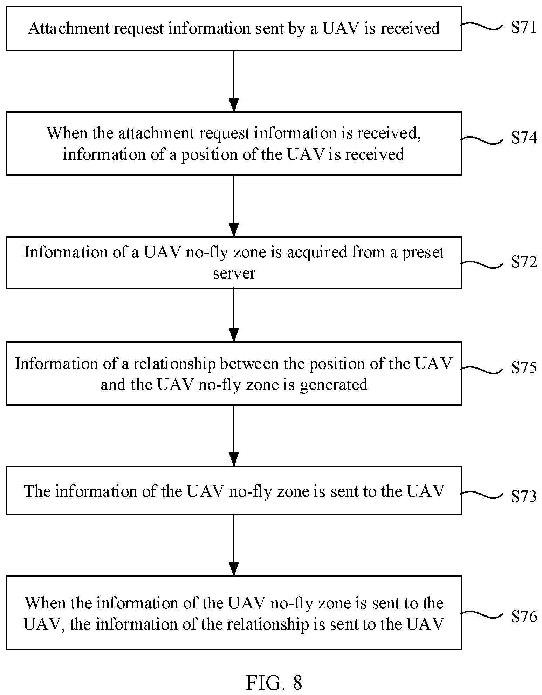

FIG. 8 is a schematic flowchart illustrating another UAV control method according to an exemplary embodiment. As shown in FIG. 8, based on the embodiment shown in FIG. 7, the UAV control method may further include the following steps.

In step S74, when the attachment request information is received, information of a position of the UAV is received.

In step S75, information of a relationship between the position of the UAV and the UAV no-fly zone is generated.

In step S76, when the information of the UAV no-fly zone is sent to the UAV, the information of the relationship is sent to the UAV.

In an embodiment, the core network, after receiving the attachment request information from the UAV, may simultaneously receive the information of the position of the UAV. Furthermore, the core network, after acquiring the information of the UAV no-fly zone from the preset server, may generate the information of the relationship between the position of the UAV and the UAV no-fly zone, for example, the position of the UAV is within the UAV no-fly zone or the position of the UAV is outside the UAV no-fly zone, according to the information of the position of the UAV and the information of the UAV no-fly zone, and send the information of the relationship between the position of the UAV and the UAV no-fly zone to the UAV.

Based on this, the UAV is not required to determine the relationship between the position of the UAV and the UAV no-fly zone but can determine the relationship between the position of the UAV and the UAV no-fly zone according to the information sent by the core network, so that a computational burden of the UAV can be reduced.

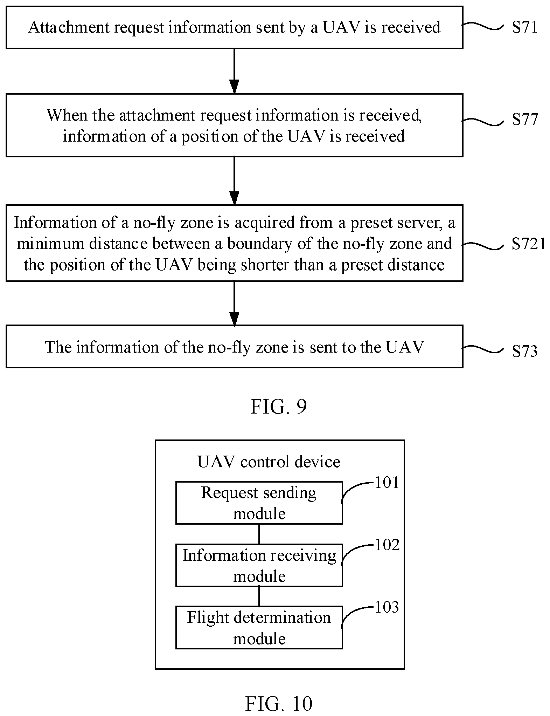

FIG. 9 is a schematic flowchart illustrating another UAV control method according to an exemplary embodiment. As shown in FIG. 9, based on the embodiment shown in FIG. 7, the UAV control method may further include the following step.

In step S77, when the attachment request information is received, the information of the position of the UAV is received.

The step that the information of the UAV no-fly zone is acquired from the preset server may include the following step.

In S721, information of a no-fly zone is acquired from the preset server, a minimum distance between a boundary of the no-fly zone and the position of the UAV is shorter than a preset distance.

In an embodiment, the core network may acquire the information of the from the preset server only, the minimum distance between the boundary of the no-fly zone and the position of the UAV being shorter than the preset distance. Since a flight range of the UAV within a certain time cannot be excessively large, the information, acquired from the preset server, of the UAV no-fly zone may be information of a UAV no-fly zone at a relatively short distance away from the position of the UAV rather than information of all UAV no-fly zones. Therefore, a data size of the information of the UAV no-fly zone needed to be acquired can be reduced, and the speed of the acquisition can be increased.

Specifically, the information of the no-fly zone to be acquired may be determined according to a relationship between the preset distance and the minimum distance between the boundary of the no-fly zone and the position of the UAV.

Corresponding to the embodiments of the UAV control method, the present disclosure also provides embodiments of a UAV control device.

FIG. 10 is a schematic block diagram of a UAV control device according to an exemplary embodiment. The UAV control device of the embodiment may be applied to a UAV, and the UAV may access a core network corresponding to a cellular network through a base station. As shown in FIG. 10, the UAV control device includes:
a request sending module 101, configured to send attachment request information to a core network;
an information receiving module 102, configured to receive information, acquired by the core network from a preset server, of a UAV no-fly zone; and
a flight determination module 103, configured to determine whether the UAV is allowed to fly or not according to a relationship between a position of the UAV and the UAV no-fly zone.

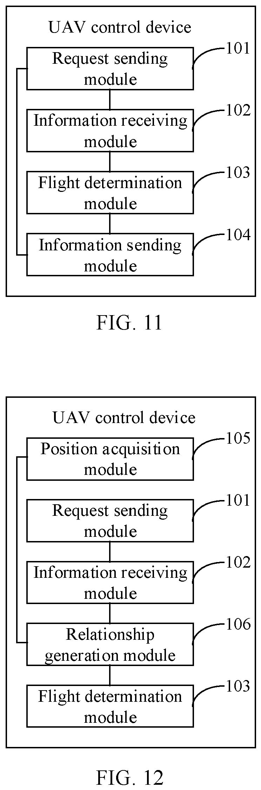

FIG. 11 is a schematic block diagram of another UAV control device according to an exemplary embodiment. As shown in FIG. 11, based on the embodiment shown in FIG. 10, the UAV control device may further include:
an information sending module 104, configured to, when the request sending module 101 sends the attachment request information to the core network, send information of the position of the UAV to the core network.

The information receiving module 102 may be further configured to, when the information, acquired by the core network from the preset server, of the UAV no-fly zone is received, receive information, generated by the core network, of the relationship between the position of the UAV and the UAV no-fly zone.

FIG. 12 is a schematic block diagram of another UAV control device according to an exemplary embodiment. As shown in FIG. 12, based on the embodiment shown in FIG. 10, the UAV control device may further include:
a position acquisition module 105, configured to, before the flight determination module 103 determines whether the UAV is allowed to fly or not, acquire the information of the position of the UAV; and
a relationship generation module 106, configured to generate information of a relationship between the position of the UAV and the UAV no-fly zone.

Optionally, the flight determination module is configured to, in a case that the UAV is within the UAV no-fly zone, determine that the UAV is not allowed to fly and, in a case that the UAV is outside the UAV no-fly zone, determine that the UAV is allowed to fly.

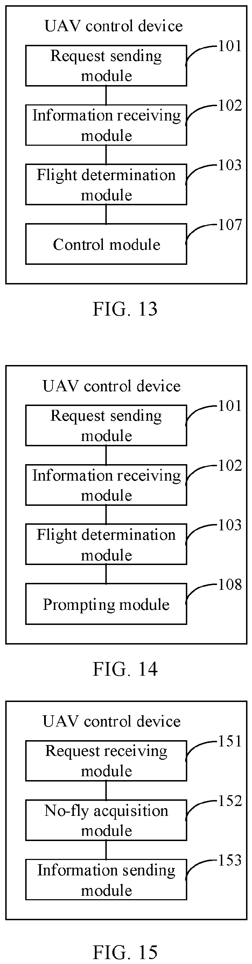

FIG. 13 is a schematic block diagram of another UAV control device according to an exemplary embodiment. As shown in FIG. 13, the UAV control device may further include:
a control module 107, configured to, under the condition of determining that the UAV is not allowed to fly, in a case that the UAV is flying, control the UAV to land.

FIG. 14 is a schematic block diagram of another UAV control device according to an exemplary embodiment. As shown in FIG. 14, the UAV control device may further include:
a prompting module 108, configured to, under the condition of determining that the UAV is not allowed to fly, in a case that an instruction of controlling the UAV to take off is received, return prompting information to a device sending the instruction.

FIG. 15 is a schematic block diagram of a UAV control device according to an exemplary embodiment. The UAV control device of the embodiment may be applied to a core network of a cellular network, and a UAV may access the core network through a base station. The device includes:
a request receiving module 151, configured to receive attachment request information from a UAV;
a no-fly acquisition module 152, configured to acquire information of a UAV no-fly zone from a preset server; and
an information sending module 153, configured to send the information of the UAV no-fly zone to the UAV.

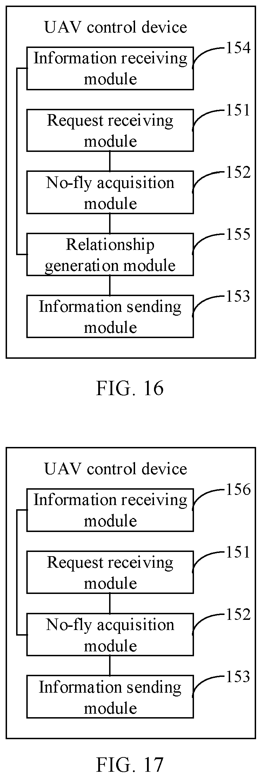

FIG. 16 is a schematic block diagram of another UAV control device according to an exemplary embodiment. As shown in FIG. 16, based on the embodiment shown in FIG. 15, the UAV control device may further include:
an information receiving module 154, configured to, when the request receiving module 151 receives the attachment request information, receive information of a position of the UAV; and
a relationship generation module 155, configured to generate information of a relationship between the position of the UAV and the UAV no-fly zone.

The information sending module 153 may be further configured to, when the information of the UAV no-fly zone is sent to the UAV, send the information of the relationship to the UAV.

FIG. 17 is a schematic block diagram of another UAV control device according to an exemplary embodiment. As shown in FIG. 17, based on the embodiment shown in FIG. 15, the UAV control device may further include:
an information receiving module 156, configured to, when the request receiving module 151 receives the attachment request information, receive information of a position of the UAV.

The no-fly acquisition module 152 is configured to acquire information of a no-fly zone from the preset server, a minimum distance between a boundary of the no-fly zone and the position of the UAV is shorter than a preset distance.

With respect to the device in the above embodiment, the specific manners for performing operations for individual modules therein have been described in detail in the embodiment regarding the method, which will not be elaborated herein.

The device embodiments substantially correspond to the method embodiments, and thus related parts refer to part of descriptions of the method embodiments. The device embodiments described above are only schematic, modules described as separate parts therein may or may not be physically separated, and parts displayed as modules may or may not be physical modules, namely, may be located in the same place or may be distributed to multiple network modules. Part or all of the modules therein may be selected according to a practical requirement to achieve the purpose of the solutions of the present disclosure. Those of ordinary skill in the art may understand and implement without creative work.

The present disclosure also provides a UAV, which includes:
a processor; and
a memory configured to store an instruction executable for the processor,
wherein the processor is configured to:
   send attachment request information to a core network;
   receive information, acquired by the core network from a preset server, of a UAV no-fly zone; and
   determine whether the UAV is allowed to fly or not according to a relationship between a position of the UAV and the UAV no-fly zone.
The present disclosure also provides a core network device, which includes:
   a processor; and
   a memory configured to store an instruction executable for the processor,
   wherein the processor is configured to:
      receive attachment request information from a UAV;
      acquire information of a UAV no-fly zone from a preset server; and
      send the information of the UAV no-fly zone to the UAV.

The present disclosure also provides a computer-readable storage medium, which has a computer program stored thereon, the program being executable by a processor to implement the following steps that:
attachment request information is sent to a core network;
information, acquired by the core network from a preset server, of a UAV no-fly zone is received; and
whether the UAV is allowed to fly or not is determined according to a relationship between a position of the UAV and the UAV no-fly zone.

The present disclosure also provides a computer-readable storage medium, which has a computer program stored thereon, the program being executable by a processor to implement the following steps that:
attachment request information sent by an unmanned aerial vehicle is received;
information of a UAV no-fly zone is acquired from a preset server; and
the information of the UAV no-fly zone is sent to the UAV.

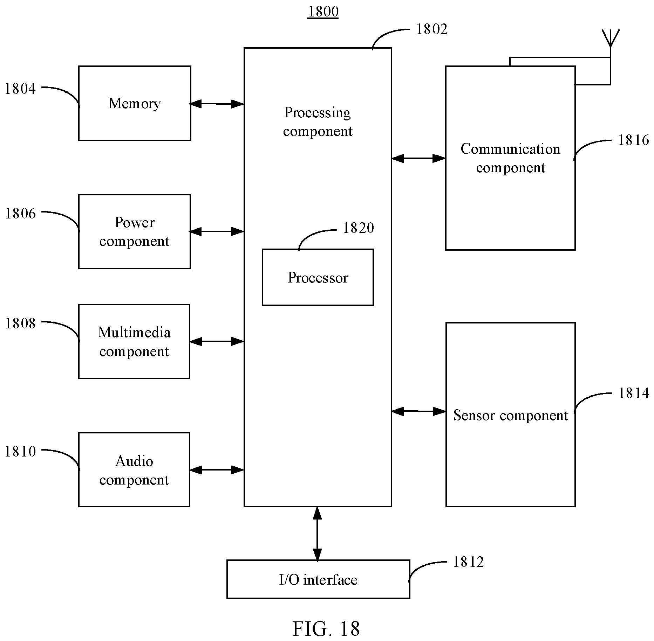

FIG. 18 is a schematic block diagram of a device 1800 for controlling a UAV according to an exemplary embodiment. For example, the device 1800 may be a mobile phone, a computer, a digital broadcast terminal, a messaging device, a gaming console, a tablet, a medical device, exercise equipment, a personal digital assistant and the like.

Referring to FIG. 18, the device 1800 may include one or more of the following components: a processing component 1802, a memory 1804, a power component 1806, a multimedia component 1808, an audio component 1810, an Input/Output (I/O) interface 1812, a sensor component 1814, and a communication component 1816.

The processing component 1802 is typically configured to control overall operations of the device 1800, such as the operations associated with display, telephone calls, data communications, camera operations, and recording operations. The processing component 1802 may include one or more processors 1820 to execute instructions to perform all or part of the steps in the abovementioned method. Moreover, the processing component 1802 may include one or more modules which facilitate interaction between the processing component 1802 and other components. For instance, the processing component 1802 may include a multimedia module to facilitate interaction between the multimedia component 1808 and the processing component 1802.

The memory 1804 is configured to store various types of data to support the operation of the device 1800. Examples of such data include instructions for any application programs or methods operated on the device 1800, contact data, phonebook data, messages, pictures, video, etc. The memory 1804 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 1806 is configured to provide power for various components of the device 1800. The power component 1806 may include a power management system, one or more power supplies, and other components associated with generation, management and distribution of power for the device 1800.

The multimedia component 1808 may include a screen for providing an output interface between the device 1800 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action but also detect a duration and pressure associated with the touch or swipe action. In some embodiments, the multimedia component 1808 may include a front camera and/or a rear camera. The front camera and/or the rear camera may receive external multimedia data when the device 1800 is in an operation mode, such as a photographing mode or a video mode. Each of the front camera and the rear camera may be a fixed optical lens system or have focusing and optical zooming capabilities.

The audio component 1810 is configured to output and/or input an audio signal. For example, the audio component 1810 includes a Microphone (MIC), and the MIC is configured to receive an external audio signal when the device 1800 is in the operation mode, such as a call mode, a recording mode and a voice recognition mode. The received audio signal may further be stored in the memory 1804 or sent through the communication component 1816. In some embodiments, the audio component 1810 further includes a speaker configured to output the audio signal.

The I/O interface 1812 is configured to provide an interface between the processing component 1802 and a peripheral interface module, and the peripheral interface module may be a keyboard, a click wheel, a button and the like. The button may include, but not limited to: a home button, a volume button, a starting button and a locking button.

The sensor component 1814 may include one or more sensors configured to provide status assessment in various aspects for the device 1800. For instance, the sensor component 1814 may detect an on/off status of the device 1800 and relative positioning of components, such as a display and small keyboard of the device 1800, and the sensor component 1814 may further detect a change in a position of the device 1800 or a component of the device 1800, presence or absence of contact between the user and the device 1800, orientation or acceleration/deceleration of the device 1800 and a change in temperature of the device 1800. The sensor component 1814 may include a proximity sensor configured to detect presence of an object nearby without any physical contact. The sensor component 1814 may also include a light sensor, such as a Complementary Metal Oxide Semiconductor (CMOS) or Charge Coupled Device (CCD) image sensor, configured for use in an imaging application. In some embodiments, the sensor component 1814 may also include an acceleration sensor, a gyroscope sensor, a magnetic sensor, a pressure sensor or a temperature sensor.

The communication component 1816 is configured to facilitate wired or wireless communication between the device 1800 and another device. The device 1800 may access a communication-standard-based wireless network, such as a Wireless Fidelity (WiFi) network, a 2nd-Generation (2G) or 3rd-Generation (3G) network or a combination thereof. In an exemplary embodiment, the communication component 1816 receives a broadcast signal or broadcast associated information from an external broadcast management system through a broadcast channel. In an exemplary embodiment, the communication component 1816 further includes a Near Field Communication (NFC) module to facilitate short-range communication. For example, the NFC module may be implemented based on a Radio Frequency Identification (RFID) technology, an Infrared Data Association (IrDA) technology, an Ultra-WideBand (UWB) technology, a Bluetooth (BT) technology and another technology.

In an exemplary embodiment, the device 1800 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the method in any embodiment of FIG. 1 to FIG. 6.

In an exemplary embodiment, there is also provided a non-transitory computer-readable storage medium including instructions, such as the memory 1804 including instructions, and the instruction may be executed by the processor 1820 of the device 1800 to implement the abovementioned methods. For example, the non-transitory computer-readable storage medium may be a ROM, a Random Access Memory (RAM), a Compact Disc Read-Only Memory (CD-ROM), a magnetic tape, a floppy disc, an optical data storage device and the like.

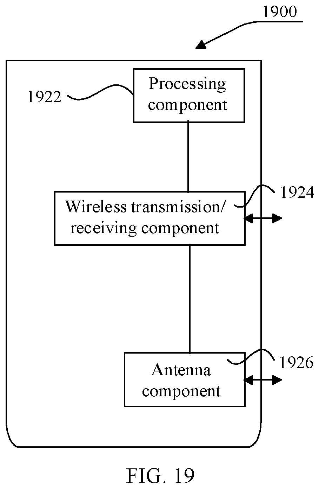

As shown in FIG. 19, FIG. 19 is a schematic block diagram of a device 1900 for controlling a UAV according to an exemplary embodiment. The device 1900 may be provided as a base station. Referring to FIG. 19, the device 1900 includes a processing component 1922, a wireless transmission/receiving component 1924, an antenna component 1926 and a wireless interface-specific signal processing part, and the processing component 1922 may further include one or more processors. One processor in the processing component 1922 may be configured to execute the method in any embodiment of FIG. 7 to FIG. 9.

Other implementation solutions of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. An unmanned aerial vehicle (UAV) control method, applied to a UAV and comprising:
sending attachment request information to a core network;
receiving information, acquired by the core network from a preset server, of a UAV no-fly zone; and
determining whether the UAV is allowed to fly or not according to a relationship between a position of the UAV and the UAV no-fly zone.

2. The UAV control method of claim 1, further comprising:
when the attachment request information is sent to the core network, sending information of the position of the UAV to the core network; and
when the information, acquired by the core network from the preset server, of the UAV no-fly zone is received, receiving information, generated by the core network, of the relationship between the position of the UAV and the UAV no-fly zone.

3. The UAV control method of claim 1, further comprising:
before determining whether the UAV is allowed to fly or not, acquiring information of the position of the UAV; and
generating information of the relationship between the position of the UAV and the UAV no-fly zone.

4. The method of any one of claims 1-3, wherein determining whether the UAV is allowed to fly or not according to the relationship between the position of the UAV and the UAV no-fly zone comprises:
in a case that the UAV is within the UAV no-fly zone, determining that the UAV is not allowed to fly; and
in a case that the UAV is outside the UAV no-fly zone, determining that the UAV is allowed to fly.

5. The method of claim 4, further comprising:
under a condition of determining that the UAV is not allowed to fly, in a case that the UAV is flying, controlling the UAV to land.

6. The method of claim 4, further comprising:
under a condition of determining that the UAV is not allowed to fly, in a case that an instruction of controlling the UAV to take off is received, returning prompting information to a device sending the instruction.

7. An unmanned aerial vehicle (UAV) control method, comprising:
receiving attachment request information from a UAV;
acquiring information of a UAV no-fly zone from a preset server; and
sending the information of the UAV no-fly zone to the UAV.

8. The method of claim 7, further comprising:
when the attachment request information is received, receiving information of a position of the UAV;
generating information of a relationship between the position of the UAV and the UAV no-fly zone; and
sending the information of the relationship to the UAV while sending the information of the UAV no-fly zone to the UAV.

9. The method of claim 7, further comprising:
when the attachment request information is received, receiving information of a position of the UAV,
wherein acquiring the information of the UAV no-fly zone from the preset server comprises:
acquiring, from the preset server, information of a no-fly zone, wherein a minimum distance between a boundary of the no-fly zone and the position of the UAV is shorter than a preset distance.

10. An unmanned aerial vehicle (UAV) control device, applied to a UAV and comprising:
a request sending module, configured to send attachment request information to a core network;
an information receiving module, configured to receive information, acquired by the core network from a preset server, of a UAV no-fly zone; and
a flight determination module, configured to determine whether the UAV is allowed to fly or not according to a relationship between a position of the UAV and the UAV no-fly zone.

11. The UAV control device of claim 10, further comprising:
an information sending module, configured to, when the request sending module sends the attachment request information to the core network, send information of the position of the UAV to the core network,
wherein the information receiving module is further configured to, when the information, acquired by the core network from the preset server, of the UAV no-fly zone is received, receive information, generated by the core network, of the relationship between the position of the UAV and the UAV no-fly zone.

12. The UAV control device of claim 10, further comprising:
a position acquisition module, configured to, before the flight determination module determines whether the UAV is allowed to fly or not, acquire information of the position of the UAV; and
a relationship generation module, configured to generate information of the relationship between the position of the UAV and the UAV no-fly zone.

13. The device of any one of claims 10-12, wherein the flight determination module is configured to, in a case that the UAV is within the UAV no-fly zone, determine that the UAV is not allowed to fly and, in a case that the UAV is outside the UAV no-fly zone, determine that the UAV is allowed to fly.

14. The device of claim 13, further comprising:
a control module, configured to, under a condition of determining that the UAV is not allowed to fly, in a case that the UAV is flying, control the UAV to land.

15. The device of claim 13, further comprising:
a prompting module, configured to, under a condition of determining that the UAV is not allowed to fly, in a case that an instruction of controlling the UAV to take off is received, return prompting information to a device sending the instruction.

16. An unmanned aerial vehicle (UAV) control device, comprising:
a request receiving module, configured to receive attachment request information from a UAV;
a no-fly acquisition module, configured to acquire information of a UAV no-fly zone from a preset server; and
an information sending module, configured to send the information of the UAV no-fly zone to the UAV.

17. The device of claim 16, further comprising:
an information receiving module, configured to, when the request receiving module receives the attachment request information, receive information of a position of the UAV; and
a relationship generation module, configured to generate information of a relationship between the position of the UAV and the UAV no-fly zone,
wherein the information sending module is further configured to send the information of the relationship to the UAV while sending the information of the UAV no-fly zone to the UAV.

18. The device of claim 16, further comprising:
a position receiving module, configured to, when the request receiving module receives the attachment request information, receive the information of the position of the UAV,
wherein the no-fly acquisition module is configured to acquire information of a no-fly zone from the preset server, where a minimum distance between a boundary of the no-fly zone and the position of the UAV is shorter than a preset distance.

19. An unmanned aerial vehicle (UAV), comprising:
a processor; and
a memory configured to store an instruction executable for the processor,
wherein the processor is configured to:
send attachment request information to a core network;
receive information, acquired by the core network from a preset server, of a UAV no-fly zone; and
determine whether the UAV is allowed to fly or not according to a relationship between a position of the UAV and the UAV no-fly zone.

20. A core network device, comprising:
a processor; and
a memory configured to store an instruction executable for the processor,
wherein the processor is configured to:
receive attachment request information from an unmanned aerial vehicle(UAV);
acquire information of a UAV no-fly zone from a preset server; and
send the information of the UAV no-fly zone to the UAV.

21. A computer-readable storage medium, having a computer program stored thereon, which, when executed by a processor, is capable of implementing steps of:
sending attachment request information to a core network;
receiving information, acquired by the core network from a preset server, of an unmanned aerial vehicle (UAV) no-fly zone; and
determining whether a UAV is allowed to fly or not according to a relationship between a position of the UAV and the UAV no-fly zone.

22. A computer-readable storage medium, having a computer program stored thereon, which, when executed by a processor, is capable of implementing steps of:
receiving attachment request information from an unmanned aerial vehicle(UAV);
acquiring information of a UAV no-fly zone from a preset server; and
sending the information of the UAV no-fly zone to the UAV.
